# EUROPEAN PATENT APPLICATION

(11) **EP 2 590 419 A2**
(43) Date of publication of application: **08.05.2013**
(21) Application number: 12191219.0
(22) Date of filing: 05.11.2012
(51) Int. Cl.: H04N 13/00

(54) **Multi-depth adaptation for video content**

(30) Priority: 04.11.2011 US 201113289509
(71) Applicant: Comcast Cable Communications, LLC, Philadelphia, PA 19103 (US)
(72) Inventor: Chen, Michael, Philadelphia, Pennsylvania 19103 (US)
(74) Representative: Jansen, Cornelis Marinus

(57) **Abstract**

A method and system for transmitting and viewing video content is described. In one aspect a plurality of versions of 3D video content may be generated. Each version of the 3D video content may include a different viewing depth profile for the 3D video content. Data representative of a viewing distance between a viewer of 3D video content and a device may be determined. Based upon the received data, a particular version of the 3D video content of the plurality of versions having a viewing depth profile corresponding to the viewing distance may be determined.

## Description

### BACKGROUND

The disclosure relates generally to transmission and display of content, and some aspects of the present disclosure relate to transmission, receipt, and rendering of 3-dimensional (3D) video content.

When viewing 2-dimensional (2D) video content, eye strain is not a common issue. A viewer's eye convergence point and eye focusing point are the same. Determining a proper viewing distance for a 2D video content experience is based upon TV screen size and screen resolution.

Yet, for a 3D video content experience, a proper viewing distance to avoid eye strain may need to take into account more than just screen size and screen resolution. This disclosure identifies and addresses shortcomings related to this and other issues.

### SUMMARY

In light of the foregoing background, the following presents a simplified summary of the present disclosure in order to provide a basic understanding of some features of the disclosure. This summary is provided to introduce a selection of concepts in a simplified form that are further described below. This summary is not intended to identify key features or essential features of the disclosure.

Some aspects of the present disclosure relate to transmitting, rendering and viewing 3D video content. A plurality of versions of 3D video content may be generated. Each version of the 3D video content may include a different viewing depth profile for the 3D video content. Data representative of a viewing distance between a viewer of 3D video content and a rendering and/or display device may be received. Based upon the received data, a particular version of the 3D video content of the plurality of versions having a viewing depth profile corresponding to the viewing distance may be determined and the particular version of the 3D video content may be outputted.

In accordance with another aspect of the present disclosure, a device such as a computing device may identify a viewing distance between a viewer and a viewing device. Based upon the identified viewing distance, a particular version of 3D video content having a viewing depth profile corresponding to the identified viewing distance may be received, and the particular version of the 3D video content may be outputted.

### BRIEF DESCRIPTION OF THE DRAWINGS

Some embodiments of the present disclosure are illustrated by way of example, and not by way of limitation, in the figures of the accompanying drawings and in which like reference numerals refer to similar elements.
FIG. 1 illustrates an example network for transmitting 3D video content in accordance with one or more aspects of the disclosure herein;
FIG. 2 illustrates another example network for transmitting 3D video content in accordance with one or more aspects of the disclosure herein;
FIG. 3 illustrates still another example network for transmitting 3D video content in accordance with one or more aspects of the disclosure herein;
FIG. 4 illustrates an example user premises with various devices on which various features described herein may be implemented;
FIG. 5 illustrates an example computing device on which various features described herein may be implemented;
FIG. 6 is an illustrative flowchart of a method for generation and transmission of 3D video content in accordance with one or more aspects of the disclosure herein;
FIG. 7 is an illustrative flowchart of a method for determining a version of 3D video content to use in accordance with one or more aspects of the disclosure herein; and
FIGS. 8A-8C illustrate an example pair of 2D video content images and a resulting 3D model in accordance with one or more aspects of the disclosure herein.

### DETAILED DESCRIPTION

Because 3D video content has the appearance of depth for objects in a scene, the closest point of a 3D image to a viewer appears much closer than the screen, while the farthest point of a 3D image to a viewer appears to be located within the screen. Yet, the 3D video content is being displayed on the screen at a distance away from where the viewer is positioned.

The proper viewing distance for 3D video content is therefore dependent upon the source 3D video content and how the eye convergence point and the eye focusing point meet. Finding the proper viewing distance is needed to order to offset an unnatural event for a viewer's brain because in normal human vision, the two points exist at the same point in space. By physically moving closer to a 3D screen, the disparity between the convergence point and the focusing point increases, leading to a more aggressive 3D experience. By physically moving further away, a viewer loses more of the 3D impact in a 3D viewing experience.

The disparity between the eye convergence point and the eye focusing point in 3D is related to the separation of the left eye image and the right eye image. A large separation results in the brain having difficulty properly fusing the left and right eye images into one 3D image. In such a situation, the 3D image would eventually appear as a blurred 2D image. In some individuals, this eye strain may result in disorientation and even headaches.

In generating 3D video content, the depth for 3D video content to avoid eye strain thus varies in different viewing environments. For theatrical presentation, such as a movie theater with projected images where viewers are positioned a large distance from the screen, the source 3D video content may be generated with objects within various projected images having a certain first depth because the distance of the viewer from the screen is anticipated to be a large distance. Differently, for local and gaming presentation, such as a home television or handheld gaming device with projected images where viewers are positioned a short distance from the screen, the source 3D video content may be generated with objects within various projected images to have a certain second depth because the distance of the viewer from the screen is anticipated to be a short distance. As other display environments gain more widespread usage, e.g. mobile devices, headgear, pico-projectors, etc., the number of viewing depths needed for source content will increase.

Source content today is produced with a single depth, such as cinematic for movies. If the same source 3D video content with a cinematic depth is utilized for home viewing, the resulting projected images are likely to cause problems with eye strain, resulting in lower usage of 3D content and service.

In the following description of the various embodiments, reference is made to the accompanying drawings, which form a part hereof, and in which is shown by way of illustration various embodiments in which features may be practiced. It is to be understood that other embodiments may be utilized and structural and functional modifications may be made.

Aspects of the disclosure may be operational with numerous general purpose or special purpose computing system environments or configurations. Examples of computing systems, environments, and/or configurations that may be suitable for use with features described herein include, but are not limited to, personal computers, server computers, handheld or laptop devices, multiprocessor systems, microprocessor-based systems, set top boxes, digital video recorders, programmable consumer electronics, spatial light modulators, network (e.g., Internet) connectable display devices, network PCs, minicomputers, mainframe computers, distributed computing environments that include any of the above systems or devices, and the like.

The features may be described and implemented in the general context of computer-executable instructions, such as program modules, being executed by one or more computers. Generally, program modules include routines, programs, objects, components, data structures, etc. that perform particular tasks or implement particular abstract data types. Features herein may also be practiced in distributed computing environments where tasks are performed by remote processing devices that are linked through a communications network. In a distributed computing environment, program modules may be located in both local and remote computer storage media including memory storage devices. Concepts of the present disclosure may be implemented for any format or network environment capable of carrying video content.

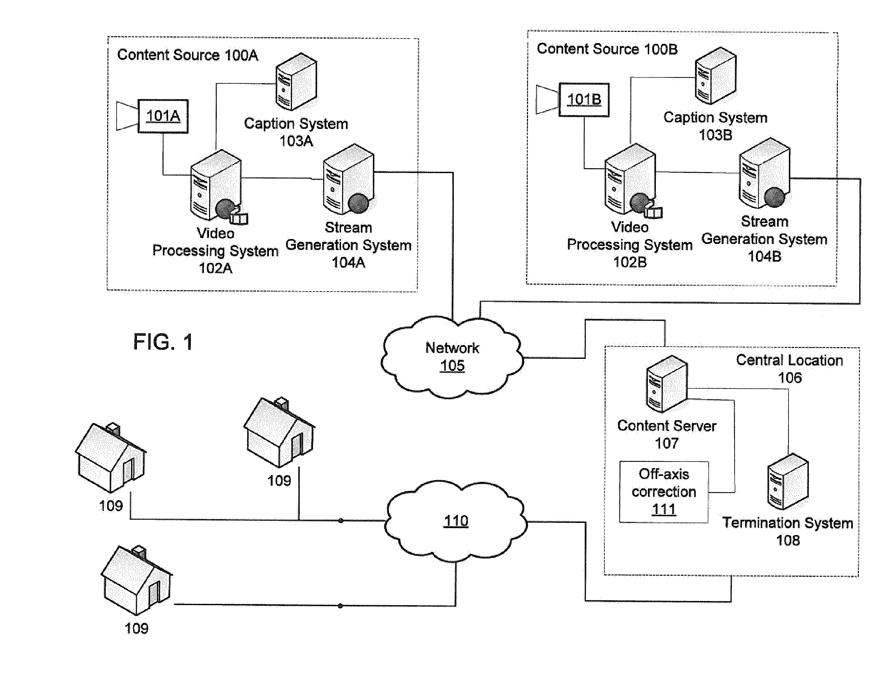

FIGS. 1, 2, and 3 illustrate example networks for generating and/or transmitting data, such as 3D video content, in accordance with one or more features of the disclosure. Aspects of the networks allow for streaming of 3D video content over a packet switched network, such as the Internet (or any other desired public or private communication network). One or more aspects of the networks may deliver 3D video content to network connected display devices. Still other aspects of the networks may adapt 3D video content to a variety of network interface devices and/or technologies, including devices capable of rendering two-dimensional (2D) and three-dimensional (3D) content. Further aspects of the networks may adapt 3D video content to a variety of distribution (e.g., network topology, network devices, etc.) characteristics. Other aspects of the networks adapt data such as graphics of an output device to viewing preferences of a user.

With respect to FIG. 1, in one aspect, two-dimensional (2D) video content, such as pre-recorded or live 2D video content, may be created and/or offered by one or more 2D content sources 100A and 100B. The content sources 100A and 100B may capture 2D video content using cameras 101A and 101B. Cameras 101A and/or 101B may be any of a number of cameras or other data capture devices that are configured to capture video content. Other sources, such as storage devices or servers (e.g., video on demand servers) may be used as a source for 2D video content. In accordance with an aspect of the present disclosure for 3D technology, cameras 101A and 101B may be configured to capture correlated synchronized video content for a left eye and a right eye, respectively, of an end viewer. As used herein, correlated video content for a left eye and a right eye of a viewer means different video content for a left eye and a right eye of a viewer that together renders the appearance of 3D video content.

The captured video content from cameras 101A and 101B may be used for generation of 2D or 3D video content for further processing and/or transmission to an end user. The data output from the cameras 101A and 101B may be sent to a video processing system 102A and 102B for initial processing of the data. Such initial processing may include any of a number of processing of such video data, for example, cropping of the captured data, color enhancements to the captured data, adding applications, graphics, logos, and association of audio and metadata to the captured video content.

In accordance with one or more aspects described herein, when capturing 2D video content by the cameras 101A and associated 101B for generation of 3D video content, image processing may be implemented to construct a 3D model of objects within the 3D video content. Scaling may be implemented mathematically to generate a plurality of different versions of the captured video content, each with a different viewing depth profile. Various manipulations of the 3D model may be used to generate the plurality of different versions of the captured video content, such as image/coordinate warping techniques. A viewing depth profile may define the visual depths of objects within a 3D environment. Because different rendering and/or display devices may be configured for viewers to be positioned at different distances away from the device, or a viewer may choose different distances, different viewing depth profiles may be utilized for making objects within 3D video content appear at different depths for the different rendering and/or display devices. For example, if a viewer wants to watch 3D video content from a mobile phone, it may be determined that the viewer is likely to be viewing the 3D video content approximately 2 feet from the mobile phone, e.g., the rendering and/or display device. However, if a viewer wants to watch the same 3D video content on her television, it may be determined that the viewer is likely to be viewing the 3D video content approximately 8 feet from the television, e.g., a different rendering and/or display device.

In one aspect, a viewing depth profile specifies viewing depths for objects within a 3D space. Such profiles may correspond to a particular type of rendering and/or display device, such as a mobile phone, a television, a movie screen, a computer monitor, a pico-projector, a pair of 3D glasses, etc., a specific rendering and/or display device, such as a specific mobile phone, specific pair of 3D glasses, a particular distance or range of distances between a viewer and a rendering and/or display device, such as 2 feet, 2-3 feet, 4 feet, 8 feet, 10-20 feet, and 50 feet, and/or a particular level of aggressiveness of the 3D video content, e.g., the closer a viewer is to a 3D rendering source, the more aggressive the 3D video content experience. Therefore, multiple viewing depth profiles may exist for a particular type of rendering and/or display device, such as a television, where one is for a viewer wanting a very aggressive 3D video content experience and another is for a viewer wanting a less aggressive 3D video content experience. A rendering device and a display device, as described herein may be different devices, which are separately located or in one physical device.

A viewing depth profile also may include data for correction of off-axis viewing. Data allowing for correction of vertical off-axis viewing may be included in the viewing depth profile. Similar to the effect of a keystone adjustment, vertical off-axis viewing may be corrected for such issues (e.g., looking down at a tablet or phone at rest on flat surface, rather than straight-on when held). Under such conditions, viewing pitch may be relevant as well as viewing distance. A content server, such a content server 107 described herein, may be configured to generate 3D video content with a viewing depth profile. Such a viewing depth profile may include correction of off-axis viewing.

3D contact may be captured or created in any manner in the spirit of the disclosure. In the example of FIG. 1, the stereoscopic images from camera 101A and 101B may be analyzed for a particular scene to find an object, such as a person. Because cameras 101A and 101B are not positioned with the exact same field of view, the two images are slightly different. As such, the location of the person in the left eye viewing point, such as from camera 101A is slightly offset from the location of the person in the right eye viewing point, such as from camera 101B. The offset may be defined by some value. Knowing this offset value, a 3D model may be constructed for defining depths of objects within the 3D video content. Scaling of the objects may be implemented to move the objects closer to or further from a viewer by using image composition techniques. In other examples, more than two image capturing devices, such as cameras 101A and 101B, may be utilized. With three or more associated viewing point images for 3D video content, a more accurate 3D model may be generated for use in generating 3D video content with different viewing depth profiles. Instead of utilizing a left eye viewing point image and a right eye viewing point image for construction of a 3D model, by utilizing three or more viewing point images, the 3D model may be constructed with fewer artifacts affecting the overall appearance of the objects within the 3D video content.

The construction of a 3D model and/or the generation of different versions of 3D video content, from image capture sources, such as camera 101A and 101B, with different viewing depth profiles may be implemented by a video processing system, such as video processing system 102A and/or 102B, and/or a content server, such as content server 107. Generated images from image capture sources, such as camera 101A and 101B, may be annotated with metadata. The metadata may include location and/or rotation information for one or more objects within a captured image. For example, camera 101A may capture an image and define the location of objects within the image by an x-axis and y-axis position. This metadata may be utilized in construction of a 3D model of the objects within the 3D environment.

Still further, generated images from a video processing system, such as video processing system 102A and/or 102B, before transmission may be annotated with metadata. The metadata may include location and/or rotation information for one or more objects within a captured image. This metadata may be utilized in construction of a 3D model of the objects within the 3D environment.

An optional caption system 103A and 103B may provide captioning data or other applications accompanying the video. The captioning data may, for example, contain textual transcripts of spoken words in an audio track that accompanies the video stream. Caption system 103A and 103B also may provide textual and/or graphic data that may be inserted, for example, at corresponding time sequences to the data from video processing system 102A and 102B. For example, data from video processing system 102A may be 2D video content corresponding to a stream of live content of a sporting event. Caption system 103A may be configured to provide captioning corresponding to audio commentary such as a sports analyst made during the live sporting event and video processing system 102A may insert the captioning into one or more video streams from camera 101A. Alternatively, captioning may be provided as a separate stream from the video stream. Textual representations of the audio commentary of the sports analyst may be associated with the 2D video content by the caption system 103A. Data from the caption system 103A, 103B and/or the video processing system 102A, 102B may be sent to a stream generation system 104A, 104B, to generate a digital data stream (e.g., an Internet Protocol stream) for an event captured by the camera 101A, 101B.

An optional audio recording system may be included within and/or in place of caption system 103A and 103B and may capture audio associated with the video signal from the cameras 101A and 101B and generate corresponding audio signals. Alternatively, cameras 101A, 101B may be adopted to capture audio. The audio captured may, for example, include spoken words in an audio track that accompanies the video stream and/or other audio associated with noises and/or other sounds. The audio recording system may generate an audio signal that may be inserted, for example, at corresponding time sequences to the captured video signals in the video processing system 102A and 102B.

The audio track may be directly associated with the images captured in the video signal. For example, cameras 101A and/or 101B may capture and generate data of a video signal with an individual talking and the audio directly associated with the captured video may be spoken words by the individual talking in the video signal. Alternatively and/or concurrently, the audio track also may be indirectly associated with the video stream. In such an example, cameras 101A and/or 101B may capture and generate data of a video signal for a news event and the audio indirectly associated with the captured video may be spoken words by a reporter not actually shown in the captured video.

For example, data from the video processing system 102A may be video content for a left eye of a viewer corresponding to live video content of a sporting event. The audio recording system may be configured to capture and provide audio commentary of a sports analyst made during the live sporting event, for example, and an optional encoding system may encode the audio signal to the video signal generated from camera 101A. Alternatively, the audio signal may be provided as a separate signal from the video signal. The audio signal from an audio recording system and/or an encoding system may be sent to a stream generation system 104, to generate one or more digital data streams (e.g., Internet Protocol streams) for the event captured by the cameras 101A, 101B.

The stream generation system 104A and 104B may be configured to convert a stream of captured and processed video data from cameras 101A and 101B, respectively, into a single data signal, respectively, which may be compressed. The caption information added by the caption system 103A, 103B and/or the audio signal captured by the cameras 101A, 101B and/or an optional audio recording system also may be multiplexed with the respective stream. As noted above, the generated stream may be in a digital format, such as an IP encapsulated format. Stream generation system 104A and 104B may be configured to encode the video content for a plurality of different formats for different end devices that may receive and output the video content. As such, stream generation system 104A and 104B may be configured to generate a plurality of Internet protocol (IP) streams of encoded video content specifically encoded for the different formats for rendering.

In one aspect, the single or multiple encapsulated IP streams may be sent via a network 105 to any desired location. The network 105 can be any type of communication network, such as satellite, fiber optic, coaxial cable, cellular telephone, wireless (e.g., WiMAX), twisted pair telephone, etc., or any combination thereof (e.g., a hybrid fiber coaxial (HFC) network). In some embodiments, a service provider's central location 106 may make the content available to users.

The central location 106 may include, for example, a content server 107 configured to communicate with content sources 100A and 100B via network 105. The content server 107 may receive requests for the 3D video content from a user, and may use a termination system, such as termination system 108, to deliver the 3D video content to user premises 109 through a network 110. Similar to network 105, network 110 can be any type of communication network, such as satellite, fiber optic, coaxial cable, cellular telephone, wireless (e.g., WiMAX), twisted pair telephone, etc., or any combination thereof (e.g., a hybrid fiber coaxial (HFC) network) and may include one or more components of network 105. The termination system 108 may be, for example, a cable modem termination system operating according to a standard. In an HFC network, for example, components may comply with the Data Over Cable System Interface Specification (DOCSIS), and the network 110 may be a series of coaxial cable and/or hybrid fiber/coax lines. Alternative termination systems may use optical network interface units to connect to a fiber optic communication line, digital subscriber line (DSL) interface circuits to connect to a twisted pair telephone line, satellite receiver to connect to a wireless satellite line, cellular telephone transceiver to connect to a cellular telephone network (e.g., wireless 3G, 4G, etc.), and any other desired termination system that can carry the streams described herein.

In delivery of 3D video content, a content server 107 may annotate 3D video content with metadata. The metadata may include data representative of a viewing depth profile. A content server 107 further may package various viewing depth profiles for the same 3D video content for transmission. The content server 107 may generate a plurality of versions of 3D video content with each version having a different viewing depth profile. Content server 107 may generate different streams of the 3D video content or may generate one master stream and different versions based upon metadata associated with the master stream. The metadata may be utilized to define the viewing depths of objects within the master 3D video content. As such, content server 107 may combine various versions of the same 3D video content for distribution and/or may transmit one 3D video content source master and metadata regarding the various versions of the generated 3D video content, each with a viewing depth profile. Content server 107 may be configured to generate the various versions of 3D video content with different viewing depth profiles, with each viewing depth profile including correction of off-axis viewing as described herein. Off-axis correction component 111 may operate with the content server 107 in order to correct vertical off-axis viewing where data representative of a viewing pitch may be included.

With respect to FIG. 1, a 3D model of objects within 3D video content may be constructed from the captured images from camera 101A and 101B. As described herein, for each object within a 3D environment, an offset value of the object between the left eye viewing point image and the associated right eye viewing point image may be determined. The offset value may be representative of a difference in orientation of the object in the left eye viewing point image and the associated right eye viewing point image. The offset value may be utilized to define the objects within a 3D space by an x-axis point, a y-axis point, and a z-axis point. Still further, the objects may be defined by a rotation vector, e.g., what direction the object is facing and/or oriented.

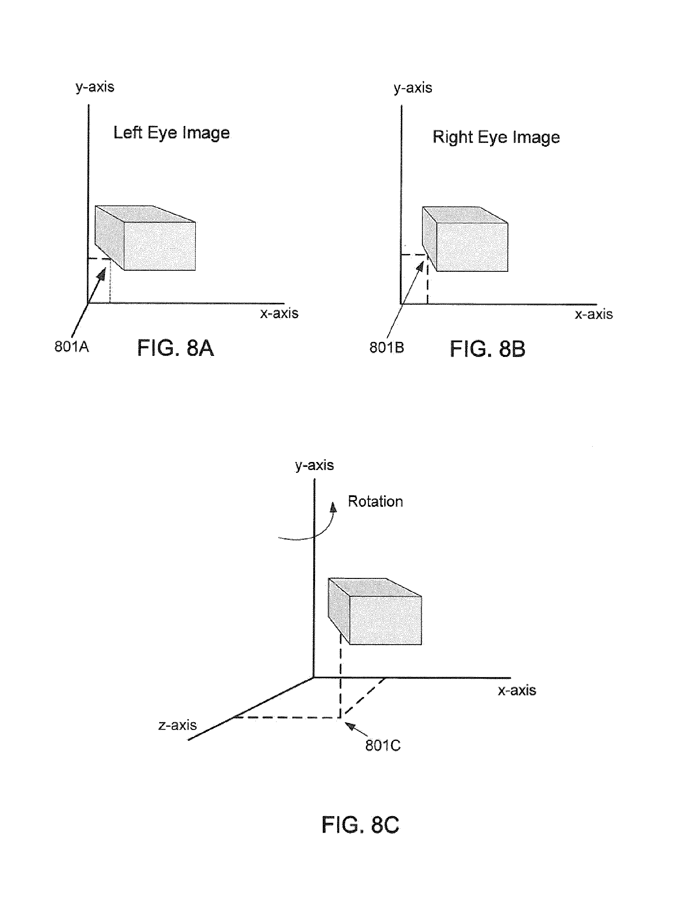

FIGS. 8A-8C illustrate an example pair of 2D video content images and a resulting 3D model in accordance with one or more aspects of the disclosure herein. FIGS. 8A and 8B may be an image of video content captured by a pair of cameras, such as cameras 101A and 101B in FIG. 1. A 3D model of objects within 3D video content may be constructed from the captured images. For an example object within a 3D environment, an offset value of the object between the left eye viewing point image, such as point 801A in FIG. 8A, and the associated right eye viewing point image, such as point 801B in FIG. 8B, may be determined. The offset value may be representative of a difference in orientation of the object in the left eye viewing point image and the associated right eye viewing point image. The offset value may be utilized to define all objects within a 3D space by an x-axis point, a y-axis point, and a z-axis point. Still further, the objects may be defined by a rotation vector, e.g., what direction the object is facing and/or oriented. In the example of FIG. 8C, the illustrative object is defined by an x-axis point, a y-axis point, a z-axis point, and a rotation vector, such as point 801C.

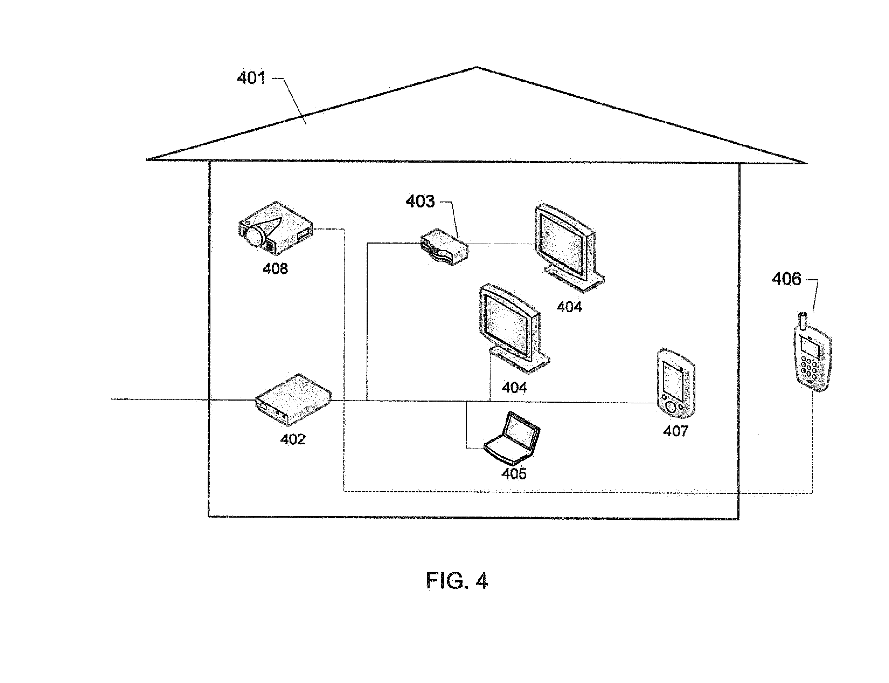

In accordance with one or more aspects described herein, desired viewing depth profiles may be generated based upon requests and/or measurements received from endpoint devices, such as gateway 402, viewing output device, 404, portable laptop computer 405, mobile phone 406, and/or pico-projector 408 as shown in FIG. 4. Actual measured distances between a viewer and a rendering and/or display device, such as mobile phone 406, may be received from a premises 401 (e.g., a user's home). An endpoint device may be configured to measure a distance between a viewer and the rendering and/or display device and transmit that measured distance to a device for transmission of a desired version of 3D video content with a particular viewing depth profile. Alternatively, distances between a viewer and a rendering and/or display device may be inferred from known device properties, e.g., a heuristic technique may be utilized to determine an anticipated viewing distance between a viewer and a rendering and/or display device, or distances may be stored in a memory by the user or another party. For example, a heuristic technique may be utilized that indicates that most viewers of 3D video content on a mobile phone hold the mobile phone approximately 2 feet away. As such, when 3D video content for a mobile phone is requested by a viewer, the system may determine that a version of the 3D video content with a viewing depth profile of 2 feet, and/or for a mobile phone, is needed. In some examples, an adaptive system may be driven by receiving indications, such as less 3D is needed or more 3D is needed, rather than more explicit data representing measured viewing distance.

In examples where a display technology or implementation is known to have a higher incidence of crosstalk, such information may be utilized to select a lower amount of depth to reduce the impacts of such crosstalk. In stereoscopic 3D displays, crosstalk refers to an incomplete isolation of the left and right image channels so that one image channel leaks or bleeds into the other. Crosstalk is a physical entity and thus may be objectively measured. Such data regarding known incidences of crosstalk may be included within a viewing depth profile.

Dynamic generation of intermediate viewing depth profiles in response to viewer requests may be implemented at a variety of areas within a system, such as by a video processing system, such as video processing system 102A and/or 102B, and a content server, such as content server 107. Still further, a system as described herein may receive feedback to trigger generation and/or replication and distribution of appropriate versions of 3D video content. While some network elements may simply transmit and/or distribute all versions of 3D video content, such as 12 versions, other content aware network elements may understand how to send fewer versions or perform some functions described herein to optimize the overall network for better delivery of a master 3D video content source.

Termination system 108 further may include a frame syncing system, which may be embodied as a computing device as depicted, for example, in Figure 4 (discussed below). A frame syncing system may be configured to compare time codes for each frame of video content in a first video signal with those for each frame of video content in a second signal. In 3D environments, the frame syncing system may match frames by time codes to produce a correlated frame synced video signal in which each frame contains the left and right eye data, e.g., images, which occur at the same time in a correlated video program. In the example of 3D video content for viewers, a frame synced video signal may be utilized by an output device of a viewer. The output device may output the frame synced video signal in a manner appropriate for a corresponding viewing device to render the video as a 3D video appearance. The resulting output from the frame syncing system may be a single stream of the frame synced signal.

Options for methods of frame syncing a first video signal with a second video signal include, but are not limited to, over/under syncing, e.g., top/bottom, side by side full syncing, alternative syncing, e.g., interlaced, frame packing syncing, e.g., a full resolution top/bottom format, checkerboard syncing, line alternative full syncing, side-by-side half syncing, and 2D+ depth syncing. These example methods are illustrative and additional methods may be utilized in accordance with aspects of the disclosure herein.

In the example of an audio signal, a frame syncing system may be configured to sync the respective audio signals with the frame synced video signal. The process of syncing the audio signals by a frame syncing system may include identifying a time sequence of the frame synced video signal to insert the corresponding audio signals. Audio may come in as different audio tracks in the same 3D signal or separately carried for each channel.

User premises, such as a home 401 described in more detail below, may be configured to receive data from network 110 or network 105. The user premises may include a network configured to receive 2D and/or 3D video content and distribute such content to one or more display devices, such as viewing devices, televisions, computers, mobile video devices, 3D headsets, pico-projectors, etc. The viewing devices, or a centralized device, may be configured to adapt graphics of an output device to 2D or 3D viewing preferences of a user. For example, 3D video content for output to a viewing device may be configured for operation with a polarized lens headgear system. As such, a viewing device or centralized server may be configured to recognize and/or interface with the polarized lens headgear system to render an appropriate 3D video image for display.

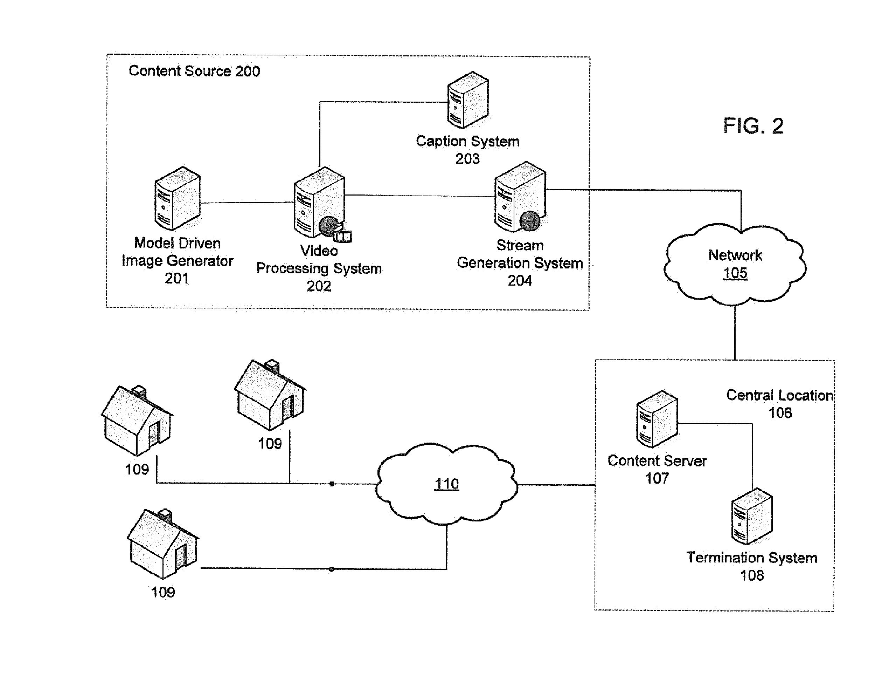

FIG. 2 illustrates another example network for transmitting 3D video content in accordance with one or more aspects of the disclosure herein. The system of FIG. 2 illustrates an example system where video content is not being captured using image capture devices, such as camera 101A and/or 101B. Rather, images for 3D video content are generated using a 3D model.

With respect to FIG. 2, a model driven image generator 201 of a content source 200 may be utilized to generate a 3D model of scenes for source material. A 3D model may be a collection of 3D objects that are anchored to a given position in a 3D space. The anchoring to a given position may be by use of x-axis, y-axis, and z-axis coordinates within a 3D space. In addition, a rotation vector may be utilized for defining the position in which the object is facing within the 3D space. Dynamic tessellation is one example manner for 3D modeling.

Dynamic tessellation techniques are often used to manage data sets of polygons and separate them into suitable structures for eventual rendering. For real-time rendering, data sets may be tessellated into triangles, which are sometimes referred to as triangulation. As such, an object may be defined by a number of particularly positioned and oriented triangles. In other examples, a constructed model may be represented by a boundary representation topological model. In such a model, analytical 3D surfaces and curves, which may be limited to faces and edges, constitute a continuous boundary of a 3D body. However, arbitrary 3D bodies are often too complicated to analyze directly. Therefore, arbitrary 3D bodies are approximated, e.g., tessellated, with a mesh of small pieces of 3D volume, usually either irregular tetrahedrons, or irregular hexahedrons. The mesh is used for finite element analysis.

Model driven image generator 201 allows for generation of 3D video content. The generated 3D video content from model drive image generator 201 may be used for further processing and/or transmission to an end user. The data output may be sent to a video processing system 202 for initial processing of the data. Such initial processing may include any of a number of processing of such video data, for example, cropping of the captured data, color enhancements to the captured data, adding applications, graphics, logos, and association of audio and metadata to the captured video content.

In accordance with at least one aspect of the present disclosure, scaling may be implemented mathematically in order to generate a plurality of different versions of the generated 3D video content, each with a different viewing depth profile. Such scaling may be performed by video processing system 202. In the example of FIG. 2, a 3D model may be utilized for defining depths of objects within the 3D video content. Scaling of the objects may be implemented to move the objects closer to or further from a viewer by using image composition techniques.

An optional caption system 203 may provide captioning data or other applications accompanying the video. Caption system 203 may provide textual and/or graphic data that may be inserted, for example, at corresponding time sequences to the data from the video processing system 202. Alternatively, the captioning may be provided as a separate stream from the video stream. Data from the caption system 203 and/or the video processing system 202 may be sent to a stream generation system 204, to generate a digital data stream (e.g., an Internet Protocol stream). Similar to the description with respect to FIG. 1, an optional audio recording system may be included within and/or in place of caption system 203 and may capture audio associated with the video images from model drive image generator 201 and generate corresponding audio signals.

The stream generation system 204 may be configured to generate a single data signal of 3D video content which may be compressed. The caption information added by the caption system 203 and/or the audio signal also may be multiplexed with the stream. As noted above, the generated stream may be in a digital format, such as an IP encapsulated format. Stream generation system 204 may be configured to encode the video content for a plurality of different formats for different end devices that may receive and output the video content. As such, stream generation system 204 may be configured to generate a plurality of Internet protocol (IP) streams of encoded video content specifically encoded for the different formats for rendering. The description of the remainder of components within FIG. 2 may follow the description of such similarly identified components in FIG. 1.

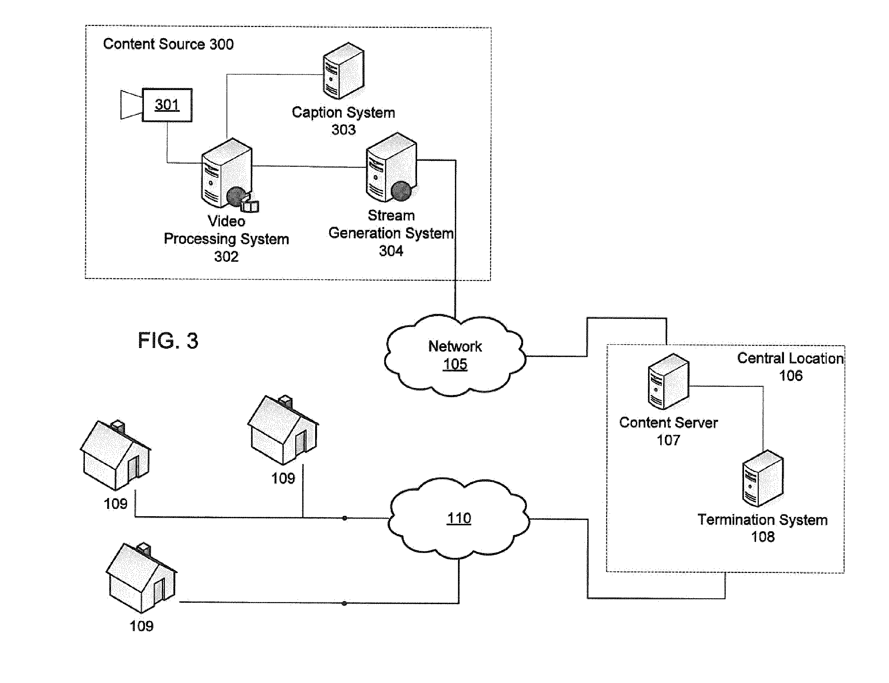

FIG. 3 illustrates still another example network for transmitting 3D video content in accordance with one or more aspects of the disclosure herein. The system of FIG. 3 illustrates an example system where 2D video content is being captured using an image capture device, such as camera 301 in a content source 300, and the 2D video content is processed artificially to add depth. A processing element takes the captured 2D image and generates an approximate 3D model. A 3D model may be a collection of 3D objects that are anchored to a given position in a 3D space. The anchoring to a given position may be by use of x-axis, y-axis, and z-axis coordinates within a 3D space. In addition, a rotation vector may be utilized for defining the position in which the object is facing within the 3D space.

Camera 301 in conjunction with a video processing system 302 allows for generation of 3D video content based upon a constructed approximate 3D model. The generated 3D video content from may be used for further processing and/or transmission to an end user. The data output from camera 301 may be sent to video processing system 302 for initial processing of the data. Such initial processing may include any of a number of processing of such video data, for example, cropping of the captured data, color enhancements to the captured data, adding applications, graphics, logos, and association of audio and metadata to the captured video content.

In accordance with at least one aspect of the present disclosure, scaling may be implemented mathematically in order to generate a plurality of different versions of the generated 3D video content, each with a different viewing depth profile. Such scaling may be performed by video processing system 302. In the example of FIG. 3, an approximated 3D model may be utilized for defining depths of objects within the 3D video content. Scaling of the objects may be implemented to move the objects closer to or further from a viewer by using image composition techniques.

An optional caption system 303 may provide captioning data or other applications accompanying the video. Caption system 303 may provide textual and/or graphic data that may be inserted, for example, at corresponding time sequences to the data from the video processing system 302. Alternatively, the captioning may be provided as a separate stream from the video stream. Data from the caption system 303 and/or the video processing system 302 may be sent to a stream generation system 304, to generate a digital data stream (e.g., an Internet Protocol stream). Similar to the description with respect to FIG. 1, an optional audio recording system may be included within and/or in place of caption system 303 and may capture audio associated with the video images from camera 301 and generate corresponding audio signals.

The stream generation system 304 may be configured to generate a single data signal of 3D video content which may be compressed. The caption information added by the caption system 303 and/or the audio signal also may be multiplexed with the stream. As noted above, the generated stream may be in a digital format, such as an IP encapsulated format. Stream generation system 304 may be configured to encode the video content for a plurality of different formats for different end devices that may receive and output the video content. As such, stream generation system 304 may be configured to generate a plurality of Internet protocol (IP) or other types of streams of encoded video content specifically encoded for the different formats for rendering. The description of the remainder of components within FIG. 3 may follow the description of such similarly identified components in FIG. 1.

FIG. 4 illustrates a closer view of user premises 401, such as a home, a business, multi-dwelling unit, or institution that may be connected to an external network, such as the network 110 in FIGs. 1, 2, and/or 3, via an interface. An external network transmission line (coaxial, fiber, wireless, etc.) may be connected to a gateway, e.g., device, 402. The gateway 402 may be a computing device configured to communicate over the network 110 with a provider's central office 106.

The gateway 402 may be connected to a variety of devices within the user premises 401, and may coordinate communications among those devices, and between the devices and networks outside the user premises 401. For example, the gateway 402 may include a modem (e.g., a DOCSIS device communicating with a CMTS in one type of network), and may offer Internet connectivity to one or more computers 405 within the user premises 401 and one or more mobile devices 406 within and/or outside of user premises 401. Although not shown, mobile devices 406 may communicate with gateway 402 through another device and/or network, such as network 105 and/or 110. The connectivity may also be extended to one or more wireless routers 403. For example, a wireless router may be an IEEE 802.11 router, local cordless telephone (e.g., Digital Enhanced Cordless Telephone - DECT), or any other desired type of wireless network. Various wireless devices within the home, such as a DECT phone (or a DECT interface within a cordless telephone), a portable media player, portable laptop computer 405, mobile devices 406, and a pico-projector 408, may communicate with the gateway 402 using a wireless router 403.

The gateway 402 may also include one or more voice device interfaces to communicate with one or more voice devices, such as telephones. The telephones may be traditional analog twisted pair telephones (in which case the gateway 402 may include a twisted pair interface), or they may be digital telephones such as a Voice Over Internet Protocol (VoIP) telephones, in which case the phones may simply communicate with the gateway 202 using a digital interface, such as an Ethernet interface.

The gateway 402 may communicate with the various devices within the user premises 401 using any desired connection and protocol. For example, a MoCA (Multimedia Over Coax Alliance) network may use an internal coaxial cable network to distribute signals to the various devices in the user premises. Alternatively, some or all of the connections may be of a variety of formats (e.g., MoCA, Ethernet, HDMI, DVI, twisted pair, etc.), depending on the particular end device being used. The connections may also be implemented wirelessly, using local wi-fi, WiMax, Bluetooth, or any other desired wireless format.

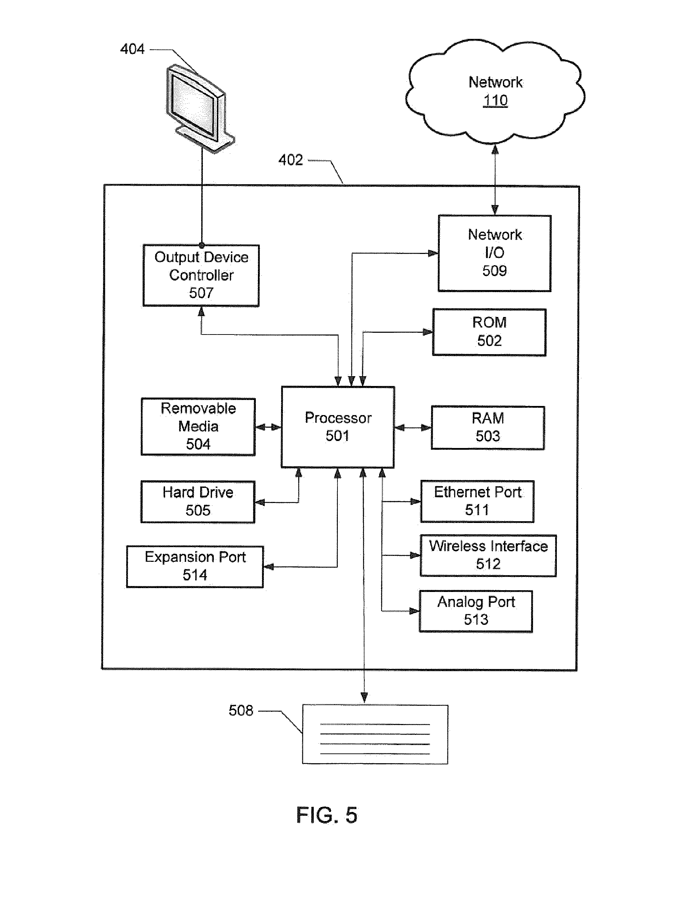

The gateway 402, which may comprise any processing, receiving, and/or displaying device, such as one or more televisions, smart phones, set-top boxes (STBs), digital video recorders (DVRs), gateways, etc., can serve as a network interface between devices in the user premises and a network, such as the networks illustrated in FIGs. 1, 2, and/or 3. Additional details of an example gateway 402 are shown in Figure 5, discussed further below. The gateway 402 may receive content via a transmission line (e.g., optical, coaxial, wireless, etc.), decode it, and may provide that content to users for consumption, such as for viewing 3D video content on a display of an output device 404, such as a 3D ready display such as a monitor, a tablet, or a projector, such as pico-projector 408. Alternatively, televisions, or other viewing output devices 404, may be connected to the network's transmission line directly without a separate interface device, and may perform the functions of the interface device or gateway. Any type of content, such as video, video on demand, audio, Internet data etc., can be accessed in this manner.

Figure 5 illustrates a computing device that may be used to implement the gateway 402, although similar components (e.g., processor, memory, non-transitory computer-readable media, etc.) may be used to implement any of the devices described herein. The gateway 402 may include one or more processors 501, which may execute instructions of a computer program to perform any of the features described herein. Those instructions may be stored in any type of non-transitory computer-readable medium or memory, to configure the operation of the processor 501. For example, instructions may be stored in a read-only memory (ROM) 502, random access memory (RAM) 503, removable media 504, such as a Universal Serial Bus (USB) drive, compact disc (CD) or digital versatile disc (DVD), floppy disk drive, or any other desired electronic storage medium. Instructions may also be stored in an attached (or internal) hard drive 505. Gateway 402 may be configured to process two or more separate signals as well, e.g., dual tuner capabilities. Gateway 402 may be configured to combine two 2D signals rather than receiving a combined signal from a headend or central office.

The gateway 402 may include or be connected to one or more output devices, such as a display 404 (or, e.g., an external television that may be connected to a set-top box), and may include one or more output device controllers 507, such as a video processor. There may also be one or more user input devices 508, such as a wired or wireless remote control, keyboard, mouse, touch screen, microphone, etc. The gateway 402 also may include one or more network input/output circuits 509, such as a network card to communicate with an external network, such as network 110 in FIGs. 1, 2, and/or 3. and/or a termination system, such as termination system 108 in FIGs. 1, 2, and/or 3. The physical interface between the gateway 402 and a network, such as network 110 may be a wired interface, wireless interface, or a combination of the two. In some embodiments, the physical interface of the gateway 402 may include a modem (e.g., a cable modem), and the external network may include a television content distribution system, such as a wireless or an HFC distribution system (e.g., a DOCSIS network).

The gateway 402 may include a variety of communication ports or interfaces to communicate with the various home devices. The ports may include, for example, an Ethernet port 511, a wireless interface 512, an analog port 513, and any other port used to communicate with devices in the user premises. The gateway 402 may also include one or more expansion ports 514. The expansion port 514 may allow the user to insert an expansion module to expand the capabilities of the gateway 402. As an example, the expansion port 514 may be a Universal Serial Bus (USB) port, and can accept various USB expansion devices. The expansion devices may include memory, general purpose and dedicated processors, radios, software and/or I/O modules that add processing capabilities to the gateway 402. The expansions can add any desired type of functionality, several of which are discussed further below.

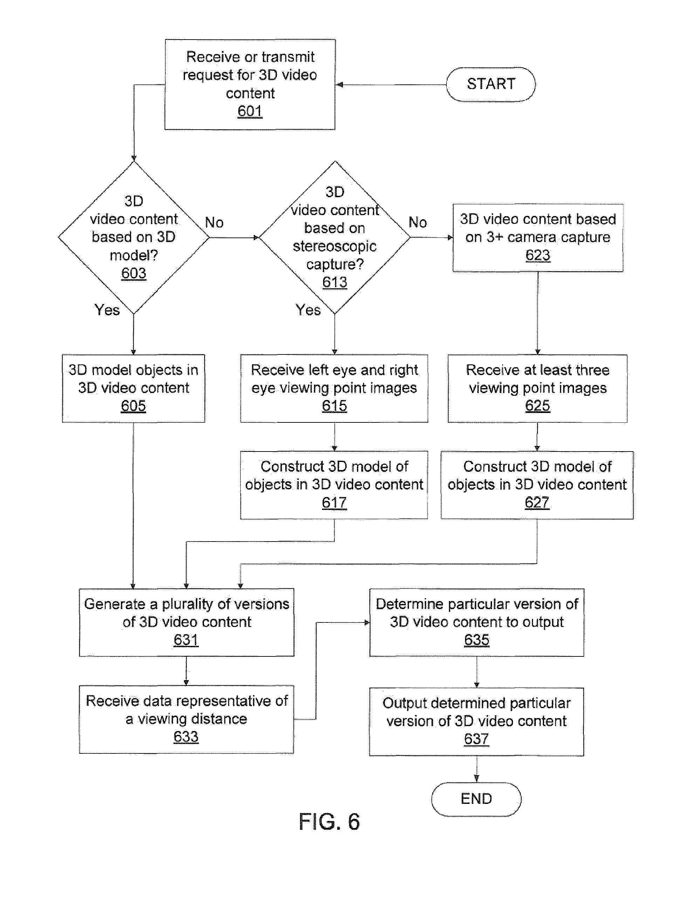

FIG. 6 is an illustrative flowchart of a method for generation and transmission of 3D video content in accordance with one or more aspects of the disclosure herein. FIG. 6 illustrates an example where a device, such as content server 107 in FIGS. 1, 2, and 3, may be configured to operate a process for outputting 3D video content. In 601, a device may receive or transmit a request for 3D video content, such as from a user via the network 110 in FIG. 1. The request may be a request for a specific version of 3D video content or may be a request for multiple versions of 3D video content.

In 603, a determination may be made as to whether the 3D video content is based upon a 3D model. For example, if the system were the system of FIG. 2, in which a model drive image generator 201 may generate 3D video content, then the determination from 603 would be yes and the process would move to 605 where 3D modeling may be utilized to 3D model objects within the 3D video content. If the 3D video content is not based upon a 3D model in 603, the process proceeds to 613.

In 613, a determination may be made as to whether the 3D video content is based on stereoscopic capture of images from two different viewing points. For example, if the system were the system of FIG. 1, in which two image capture devices 101A and 101B may capture viewing point images, then the determination from 613 would be yes and the process would move to 615 where left eye viewing point images and associated right eye viewing point images may be received. Then, in 617, a 3D model may be constructed for objects within the 3D video content. If the 3D video content is not based on stereoscopic capture of images in 613, the process proceeds to 623.

In 623, the system may determine that the 3D video content is based on three or more camera captures of images from different viewing points. For example, if the system were a system in which three or more image capture devices, such as cameras 101A and 101B in FIG. 1, in 625 at least three viewing point images may be received. Then, in 627, a 3D model may be constructed for objects within the 3D video content.

Whether from 605, 617, or 627, or other types of 3D capture/creation process, the process moves to 631 where a plurality of versions of 3D video content may be generated. Each version may have a different viewing depth profile for the 3D video content. Moving to 633, data representative of a viewing distance may be received. The data may be based upon an actual measurement taken of the viewing distance between a viewer and a display device, such as a television, or the data may be based upon an anticipated viewing distance based upon a heuristic technique.

Proceeding to 635, a particular version of 3D video content to output may be determined. The particular version may be based on the received data representative of the viewing distance in 633. Then, in 637, the determined particular version of the 3D video content may be outputted. The determined particular version of the 3D video content may be outputted through a network to an end user, such as through network 110 to an end user at user premises 109 in FIG. 1.

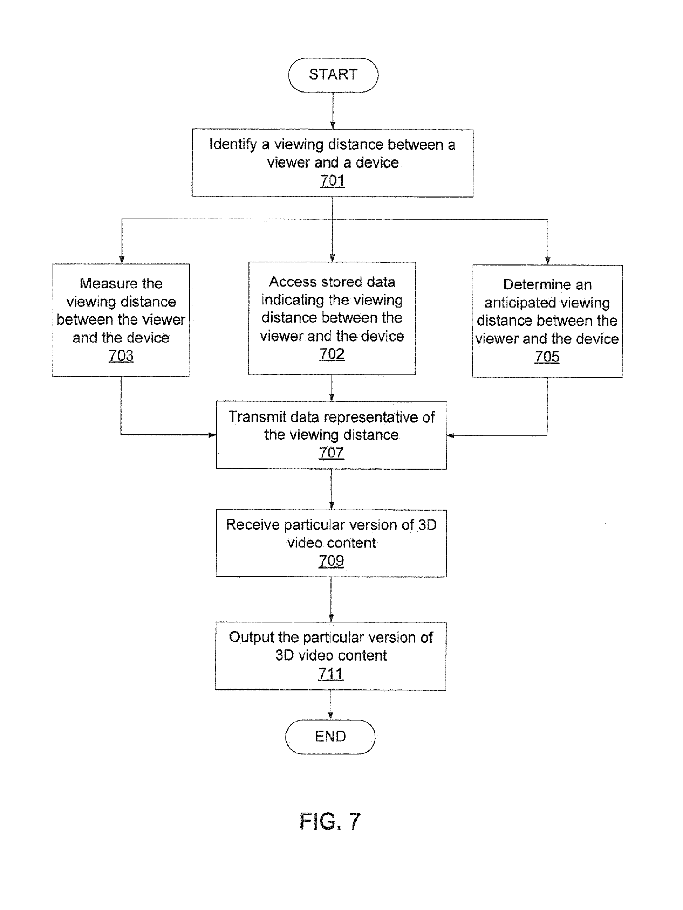

FIG. 7 is an illustrative flowchart of a method for a device, such as gateway 402 in FIGS. 4 and 5, which may be configured to determine a version of 3D video content to use in accordance with one or more aspects of the disclosure herein. In 701, a device may identify a viewing distance between a viewer and a rendering device. The identification of the viewing distance in 701 may be based upon a measurement of the viewing distance between the viewer and the rendering device in 703 or may be based on an anticipated viewing distance between the viewer and the rendering device in 705. From 703 or 705 the process moves to 707 where data representative of the viewing distance may be transmitted. For example, gateway 402 may transmit the data to content server 107, which may be a cloud based server, in FIGS. 1, 2, and/or 3.

Proceeding to 709, a particular version of 3D video content may be received. The particular version of the 3D video content may be received in response to the measured or anticipated viewing distance data transmitted in 707. In 711, the particular version of the 3D video content may be outputted, such as from gateway 402 to display device 404.

Other embodiments include numerous variations on the devices and techniques described above. Embodiments of the disclosure include a machine readable storage medium (e.g., a CD-ROM, CD-RW, DVD, floppy disc, FLASH memory, RAM, ROM, magnetic platters of a hard drive, etc.) storing machine readable instructions that, when executed by one or more processors, cause one or more devices to carry out operations such as are described herein.

The foregoing description of embodiments has been presented for purposes of illustration and description. The foregoing description is not intended to be exhaustive or to limit embodiments of the present disclosure to the precise form disclosed, and modifications and variations are possible in light of the above teachings or may be acquired from practice of various embodiments. Additional embodiments may not perform all operations, have all features, or possess all advantages described above. The embodiments discussed herein were chosen and described in order to explain the principles and the nature of various embodiments and their practical application to enable one skilled in the art to utilize the present disclosure in various embodiments and with various modifications as are suited to the particular use contemplated. The features of the embodiments described herein may be combined in all possible combinations of methods, apparatuses, modules, systems, and machine-readable storage media. Any and all permutations of features from above-described embodiments are the within the scope of the disclosure.

## Claims

1. A method comprising:
generating, at a computing device, a plurality of versions of 3D video content, each version of the 3D video content including a different viewing depth profile for the 3D video content;
receiving data representative of a viewing distance between a viewer of 3D video content and a display device;
based upon the received data representative of the viewing distance, determining a particular version of the 3D video content of the plurality of versions having a viewing depth profile corresponding to the viewing distance; and
outputting, from the computing device, the particular version of the 3D video content.

2. The method of claim 1, wherein the generating the plurality of versions of the 3D video content includes 3D modeling objects in the 3D video content.

3. The method of claim 2, wherein 3D modeling objects in the 3D video content includes defining the objects within a 3D space by an x-axis point, a y-axis point, and a z-axis point and by a rotation vector.

4. The method of claim 1, wherein the generating the plurality of versions of the 3D video content includes:
receiving a left eye viewing point image and an associated right eye viewing point image for the 3D video content, and
constructing a 3D model of objects in the 3D video content based upon the received left eye image and right eye image.

5. The method of claim 4, wherein constructing a 3D model includes:
for each object, determining an offset value of the object between the left eye viewing point image and the associated right eye viewing point image, the offset value representative of a difference in orientation of the object in the left eye viewing point image and the associated right eye viewing point image; and
for each object, defining the object within a 3D space by an x-axis point, a y-axis point, and a z-axis point and by a rotation vector based upon the determined offset value.

6. The method of claim 1, wherein the generating the plurality of versions of the 3D video content includes:
receiving at least three associated viewing point images for the 3D video content, and
constructing a 3D model of objects in the 3D video content based upon the received at least three associated viewing point images.

7. The method of claim 6, wherein constructing a 3D model includes for each object, defining the object within a 3D space by an x-axis point, a y-axis point, and a z-axis point and by a rotation vector based upon the at least three associated viewing point images for the 3D video content.

8. The method of claim 1, wherein the generating the plurality of versions of the 3D video content includes:
receiving single viewing point images of 2D video content,
processing the single viewing point images to add depth, and
constructing a 3D model of objects in the 3D video content based upon the processed single viewing point images.

9. The method of claim 1, wherein the data representative of the viewing distance is data corresponding to an actual viewing distance measured between the viewer and the display device.

10. The method of claim 1, wherein the data representative of the viewing distance is data corresponding to an indication of less 3D being needed.

11. An apparatus comprising:
at least one processor; and
at least one memory, the at least one memory storing computer-executable instructions that, when executed by the at least one processor, causes the at least one processor to perform a method of:
receiving data representative of a viewing distance between a viewer of 3D video content and a display device;
based upon the received data representative of the viewing distance, retrieving a particular version of the 3D video content of a plurality of versions having a viewing depth profile corresponding to the viewing distance; and
outputting the particular version of the 3D video content.

12. The apparatus of claim 11, further comprising generating the plurality of versions of the 3D video content includes 3D modeling objects in the 3D video content, wherein 3D modeling objects in the 3D video content includes defining the objects within a 3D space by an x-axis point, a y-axis point, and a z-axis point and by a rotation vector.

13. The apparatus of claim 11, further comprising generating the plurality of versions of the 3D video content, which comprises:
receiving a left eye viewing point image and an associated right eye viewing point image for the 3D video content, and
constructing a 3D model of objects in the 3D video content based upon the received left eye image and right eye image.

14. The apparatus of claim 11, further comprising generating the plurality of versions of the 3D video content, which comprises:
receiving single viewing point images of 2D video content,
processing the single viewing point images to add depth, and
constructing a 3D model of objects in the 3D video content based upon the processed single viewing point images.

15. The apparatus of claim 11, further comprising generating the plurality of versions of the 3D video content comprising receiving data representative of a request for a version of the 3D video content that includes a specific viewing depth profile for the 3D video content.
